# EUROPEAN PATENT APPLICATION

(11) **EP 2 916 498 A1**
(43) Date of publication of application: **09.09.2015**
(21) Application number: 13850680.3
(22) Date of filing: 27.09.2013
(51) Int. Cl.: H04L 12/723

(54) **GLOBAL CONCURRENT OPTIMIZATION METHOD, DEVICE AND SYSTEM FOR LABEL SWITCHING PATH**

(30) Priority: 31.10.2012 CN 201210427923
(71) Applicant: ZTE Corporation, Shenzhen, Guangdong 518057 (CN)
(72) Inventor: TANG, Kexin, Shenzhen Guangdong 518057 (CN); LIN, Xuefeng, Shenzhen Guangdong 518057 (CN); ZHAO, Yongli, Shenzhen Guangdong 518057 (CN); ZHANG, Yin, Shenzhen Guangdong 518057 (CN)
(74) Representative: Mozzi, Matteo
(86) International application number: PCT/CN2013/084525
(87) International publication number: WO 2014/067377

(57) **Abstract**

A Global Concurrent Optimization (GCO) method, device and system for Label Switching Path (LSP) are provided. The method comprises that: a Path Calculate Element (PCE) calculates the path of each LSP of a set of LSPs in a network, groups all LSPs, and performs a sequencing operation to obtain the setup and/or deleting order of the each LSP in a group to which the each LSP belongs, wherein the each LSP belongs to one group; and the PCE transmits a path calculation response message to a Path Calculation Client (PCC), wherein the path calculation response message carries the path calculation result of the each LSP of the set of LSPs, the grouping information of the each LSP and the setup and/or deleting order of the each LSP in the group to which the each LSP belongs. According to the present invention, a large number of the LSPs are divided into multiple optimization/re-optimization groups, the setup and/or deleting order for the LSPs in the each group are set, and while a large number of the LSPs are optimized/re-optimized by using the GCO, the operations of the groups are concurrently performed, thus improving the optimization/re-optimization efficiency.

## Description

### Technical Field

The present invention relates to the field of communications, including e.g., a global concurrent optimization method, device and system for a Label Switching Path (LSP).

### Background

Path Calculation Element Protocol (PCEP) is defined in the Request For Comment (RFC) 5440 from Internet Engineering Task Force (IETF). The PCEP is used to calculate a path in a Multi-Protocol Label Switching (MPLS)/General Multi-Protocol Label Switching (GMPLS) network. The communication between Path Calculation Element (PCE) and Path Calculation Client (PCC) includes a path calculation request, a path calculation response, and a series of communication modes and contents of event notification messages. The PCEP defines various messages to implement the communication between the PCC and the PCE, as well as between the two PCEs. Various objects are also defined for these messages to include necessary communication information, wherein a defined Request Parameter (RP) object is used to describe the feature of the path calculation request.

When the PCE optimizes/re-optimizes a set of LSPs, the paths of the set of LSPs are calculated concurrently, that is, the topology of the whole network, and the network resources required to be occupied by the set of LSPs and constraint conditions are considered simultaneously to optimize the utilization rate of the network resources. Such application for calculating the path concurrently is named as Global Concurrent Optimization (GCO). The GCO is described in the RFC 5557 from the IETF. When the network is optimized/re-optimized, the GCO provides a function of sequencing an old LSP delete and/or a new LSP setup order, so that these LSPs may be deleted and/or set up in a certain order, thereby utilizing effectively the limited network resources. To this end, the RP object defined in the RFC 5440 is extended in the RFC 5557, so that during the process of optimizing/re-optimizing a set of LSPs by using the GCO application, the setup and delete order information of each LSP in the set of LSPs may be carried simultaneously while the PCE calculates the paths of the group of LSPs. For an Optional Type Length Value (i.e., Optional TLV) included in the RP object, a new type of Optional TLV (i.e., Type 5 TLV) is defined. The TLV includes four fields: Type, Length, Delete Order, Setup Order, respectively representing the type of the TLV, the total length of the Optional TLV (calculated in bytes), the delete and/or setup order of the LSP in the set of LSPs.

Fig. 1 is a schematic diagram of an encoding format of the RP object defined in the RFC 5440 according to the related art. As shown in Fig. 1, the included Optional TLVs are optional contents with unlimited length, used to describe the feature of the path calculation request described by the RP object.

Fig. 2 is a schematic diagram of a format of the Order TLV defined in the RFC 5557 according to the related art. The RFC 5557 newly defines the format of the Optional TLV, i.e., the format of the Order TLV after extending the PCEP, as shown in Fig. 2.

The length of the Type field is 16-bit, representing the type of the TLV, with a value of 5. The length of the Length field is 16-bit, representing the total length of the object, in bytes (8 bits). The total length of a sub-object includes the length of the Type field and the length of the Length field. The value of Length is at least 4 (bytes), and should be an integral multiple of 4 (bytes). The length of a Delete Order field is 32-bit, representing a relative order in which the LSP is deleted centrally in the set of the LSPs during the process of this optimization/re-optimization. The length of Setup Order field is 32-bit, representing a relative order in which the LSP is established centrally in the set of the LSPs during the process of this optimization/re-optimization.

When the GCO described in the RFC 5557 is applied to the optimization/re-optimization of the set of the LSPs, all the LSPs are deleted and/or established in order. Only when the deleting/setup operation of the previous LSP is finished, the deleting/setup operation of next LSP is performed, that is, only one deleting/setup operation of the LSP is performed at the same time, the deleting/setup operation of the next LSP is performed until the deleting/setup operation of the previous LSP is finished. However, the GCO is generally an optimization/re-optimization application for a large number of LSPs. When the GCO is performed in order one time, from the deleting/setup operation of the first LSP to the deleting/setup operation of the last LSP, the deleting and/or setup operation of the large number of optimized/re-optimized LSPs will consume a long time.

### Summary

A GCO method, device and system for an LSP are provided in the embodiment of the present invention, by which the problem is solved in the related technology that a set of the LSPs to be optimized/re-optimized must be set up and/or deleted in order, which consumes a long time.

According to an aspect of the present invention, a Global Concurrent Optimization, GCO, method for Label Switching Path, LSP, is provided, comprising: calculating, by a Path Calculate Element, PCE, a path of each LSP of a set of LSPs in a network, grouping all LSPs of the set of the LSPs, and performing a sequencing operation to obtain a setup and/or deleting order of the each LSP in a group to which the each LSP belongs, wherein the each LSP belongs to one group; and transmitting, by the PCE, a path calculation response message to a Path Calculate Client, PCC, wherein the path calculation response message carries a path calculation result of the each LSP of the set of the LSPs, grouping information of the each LSP, and the setup and/or deleting order of the each LSP in the group to which the each LSP belongs.

According to an embodiment of the present invention, after the PCE transmits the path calculation response message to the PCC, the method further comprises: receiving, by the PCC, the path calculation response message from the PCE; and performing a setup and/or deleting operation by the PCC for the set of the LSPs according to the path calculation response message.

According to an embodiment of the present invention, performing the setup and/or deleting operation by the PCC for the set of the LSPs according to the path calculation response message comprises: the PCC performing a setup and/or deleting operation for a LSP in each group according to the grouping information of the each LSP, and the setup and/or deleting order of the each LSP in the group to which the each LSP belongs in the path calculation response message, wherein setup and/or deleting operations are concurrently performed for groups.

According to an embodiment of the present invention, before the PCE calculates the path of the each LSP of the set of the LSPs in the network, the method further comprises: receiving, by the PCE, a path calculation request message from the PCC, wherein the path calculation request message is configured to request the PCE to calculate paths of a set of LSPs to be set up in the network or recalculate paths of a set of existing LSPs in the network; wherein the calculating, by the PCE, the path of the each LSP of the set of the LSPS comprises: the PCE calculating the paths of the set of the LSPs to be set up in the network or recalculating the paths of the set of the existing LSPs in the network.

According to an embodiment of the present invention, the grouping information of the each LSP of the set of the LSPs, and the setup and/or deleting order of the each LSP in the group to which the each LSP belongs are carried in an optional Order Type Length Value, TLV, of a Request Parameter, RP, object in the path calculation response message.

According to another aspect of the embodiment of the present invention, a Global Concurrent Optimization, GCO, device for Label Switching Path, LSP, applied to a Path Calculation Element, PCE, comprising: a processing component, configured to calculate a path of each LSP of a set of LSPs in a network, group all LSPs of the set of the LSPs, and perform a sequencing operation to obtain a setup and/or deleting order of the each LSP in a group to which the each LSP belongs, wherein the each LSP belongs to one group; and a transmitting component, configured to transmit a path calculation response message to a Path Calculate Client, PCC, wherein the path calculation response message carries a path calculation result of the each LSP of the set of LSPs, grouping information of the each LSP, and the setup and/or deleting order of the each LSP in the group to which the each LSP belongs.

According to an embodiment of the present invention, further comprising: a receiving component, configured to receive a path calculation request message from the PCC, wherein the path calculation request message is configured to request the PCE to calculate paths of a set of LSPs to be set up in the network or recalculate paths of a set of existing LSPs in the network, wherein the processing component comprises: a calculating element, configured to calculate the paths of the set of the LSPs to be set up in the network or recalculate the paths of the set of the existing LSPs in the network.

According to an embodiment of the present invention, the grouping information of the each LSP of the set of the LSPs and the setup and/or deleting order of the each LSP in the group to which the each LSP belongs are carried in an optional Order Type Length Value, TLV, of a Request Parameter, RP, object in the path calculation response message.

According to another aspect of the embodiment of the present invention, a Global Concurrent Optimization, GCO, system for Label Switching Path, LSP, comprising: a Path Calculate Client, PCC, and a Path Calculate Element, PCE, wherein the PCE is the PCE according to any one of the above embodiment; the PCC comprises: a receiving component, configured to receive the path calculation response message from the PCE; and a processing component, configured to perform a setup and/or deleting operation for the set of the LSPs according to the path calculation response message.

According to an embodiment of the present invention, the processing component comprises: a processing element, configured to perform a setup and/or deleting operation for a LSP in each group according to the grouping information of the each LSP and the setup and/or deleting order of the each LSP in the group to which the each LSP belongs in the path calculation response message, wherein setup and/or deleting operations are concurrently performed for groups.

According to the present invention, a large number of the LSPs are divided into multiple optimization/re-optimization groups, and the setup and/or deleting order for the each LSP in each group is set. While the large number of the LSPs are optimized/re-optimized by using the GCO application, the operations of the groups are concurrently performed, which reduces the optimization/re-optimization time and improves the optimization/re-optimization efficiency greatly.

### Brief Description of the Drawings

The accompanying drawings described herein serve to provide a further understanding of the embodiment of the present invention, and constitute a part of this application. The schematic embodiments of the present invention and description thereof serve to explain the present invention rather than to limit the present invention inappropriately. In the drawings:

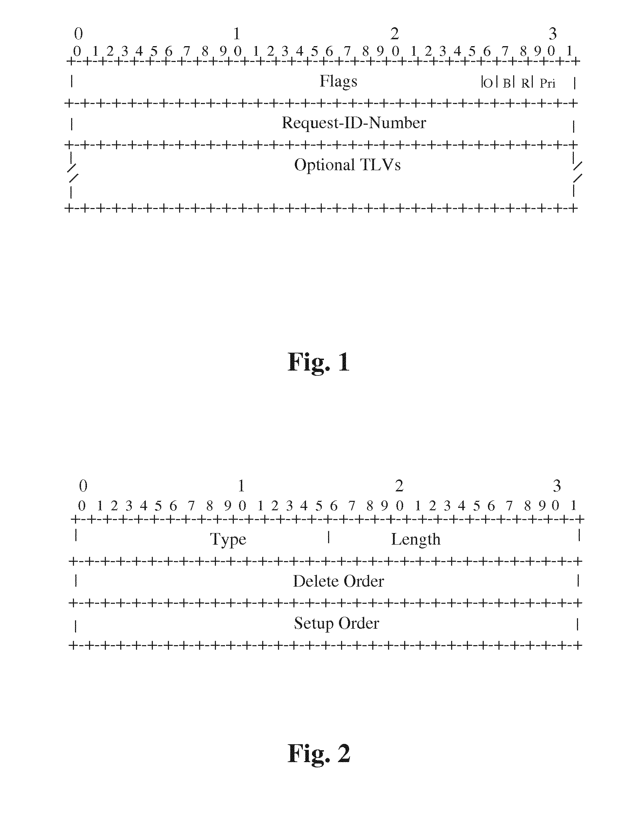

Fig. 1 is a schematic diagram of an encoding format of the RP object defined in an RFC 5440 according to the related art;
Fig. 2 is a schematic diagram of a format of the Order TLV defined in the RFC 5557 according to the related art;

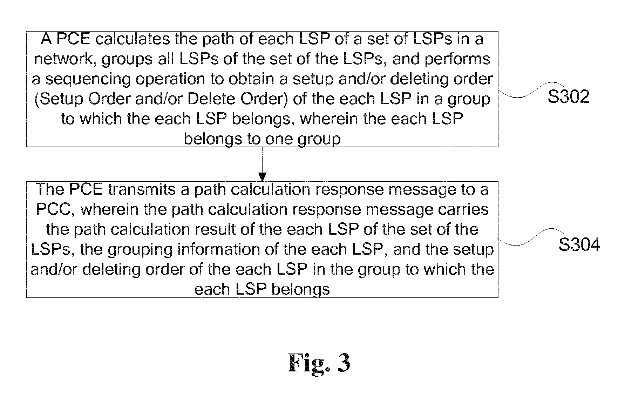

Fig. 3 is a flowchart of the GCO method for the LSP according to an embodiment of the present invention;

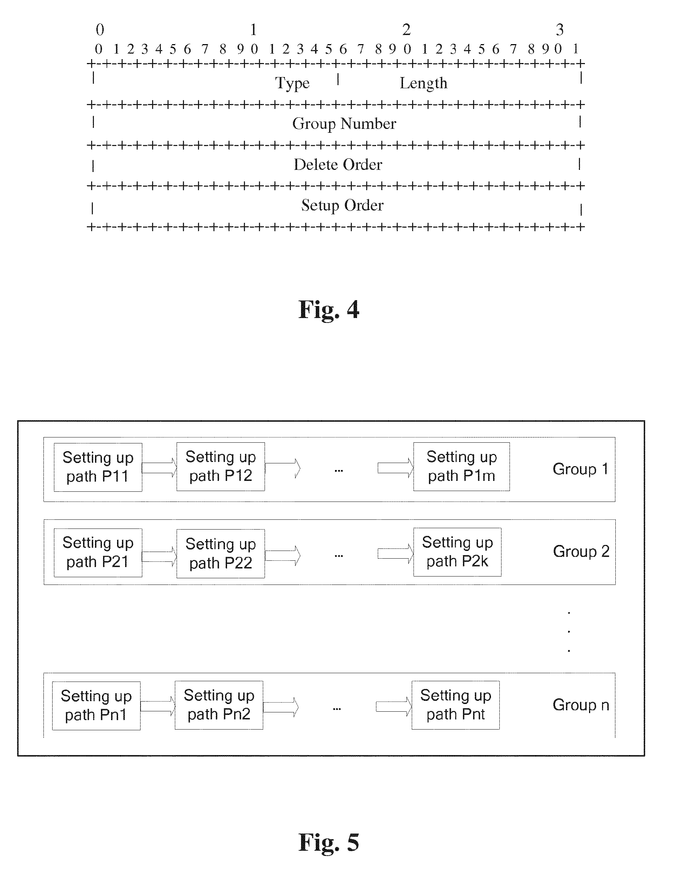

Fig. 4 is a schematic diagram of an extended Order TLV format according to an example embodiment of the present invention;
Fig. 5 is a schematic diagram of a set of the LSPs optimized by the GCO according to an example embodiment of the present invention;

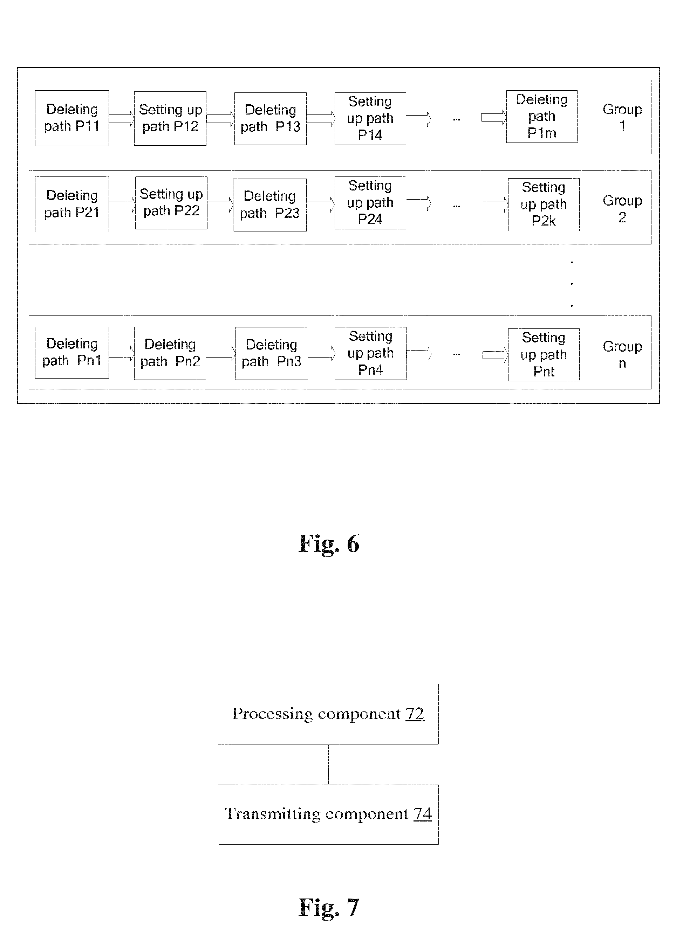

Fig. 6 is a schematic diagram of a set of the LSPs re-optimized by the GCO according to an example embodiment of the present invention;
Fig. 7 is a structural diagram of a GCO device for an LSP according to an example embodiment of the present invention; and

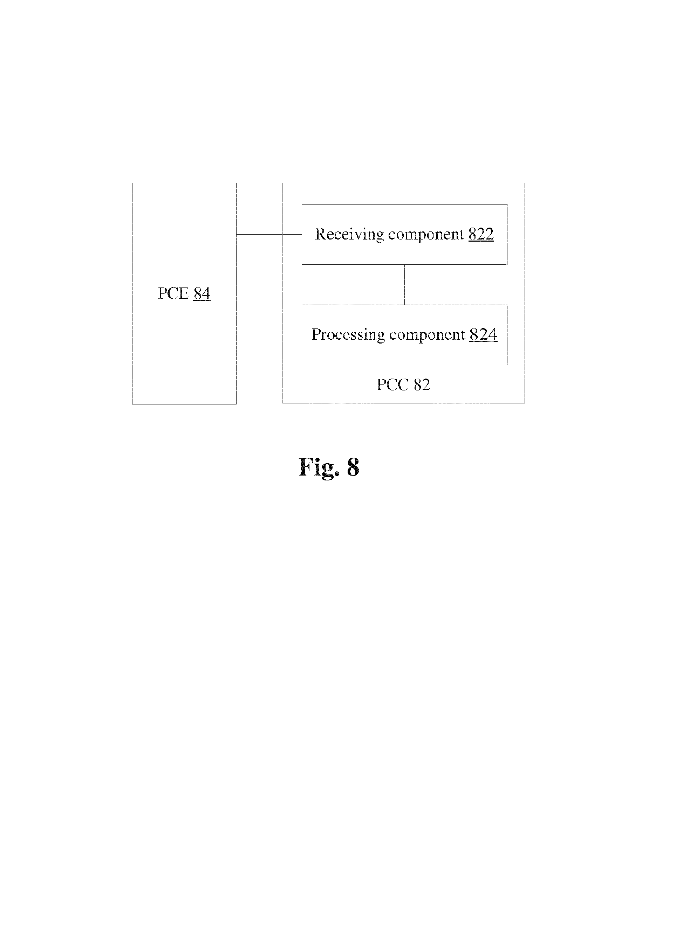

Fig. 8 is a structural diagram of a GCO system for an LSP according to an example embodiment of the present invention.

### Detailed Description of the Embodiments

It should be noted that the embodiments of the application and the features of the embodiments may be combined with each other without any conflict. The present invention will be described below in detail with reference to the accompanying drawings and in conjunction with the embodiments.

A GCO method for an LSP is provided in the embodiment of the present invention. Fig. 3 is a flowchart of the GCO method for the LSP according to an embodiment of the present invention. As shown in Fig. 3, the method includes Step S302 to Step S304 as follows.

Step S302: A PCE calculates the path of each LSP of a set of LSPs in a network, groups all LSPs of the set of the LSPs, and performs a sequencing operation to obtain a setup and/or deleting order (Setup Order and/or Delete Order) of the each LSP in a group to which the each LSP belongs, wherein the each LSP belongs to one group.

Step S304: The PCE transmits a path calculation response message to a PCC, wherein the path calculation response message carries the path calculation result of the each LSP of the set of the LSPs, the grouping information of the each LSP, and the setup and/or deleting order of the each LSP in the group to which the each LSP belongs.

In the related art, when the set of the LSPs are optimized/re-optimized, the LSPs need to be set up and/or deleted in order, which consumes a long time. In the embodiment of the present invention, a large number of LSPs are divided into the multiple optimization/re-optimization groups, and the setup and/or deleting order for the each LSP in each group is set. While the large number of LSPs are optimized/re-optimized by using the GCO application, the operations of the groups are concurrently performed, which reduces the optimization/re-optimization time and improves the optimization/re-optimization efficiency greatly.

After Step S304, the method further includes that: the PCC receives the path calculation response message from the PCE; and the PCC performs a setup and/or deleting operation for the set of the LSPs according to the path calculation response message.

The PCC performing the setup and/or deleting operation for the set of the LSPs according to the path calculation response message includes that: the PCC performs a setup and/or deleting operation for a LSP in each group according to the grouping information of the each LSP and the setup and/or deleting order of the each LSP in the group to which the each LSP belongs in the path calculation response message, wherein setup and/or deleting operations are concurrently performed for groups. In the example embodiment, the operations of the groups in the set of the LSPs are concurrently performed, so that the time of optimizing/re-optimizing the set of LSPs is effectively saved.

Before Step S302, the method further includes that: the PCE receives a path calculation request message from the PCC, wherein the path calculation request message is configured to request the PCE to calculate the paths of the set of LSPs to be set up in the network or recalculate the paths of the set of existing LSPs in the network; wherein the PCE calculating the path of the each LSP of the set of the LSPs includes: the PCE calculates the paths of the set of the LSPs to be set up in the network or recalculates the paths of the set of the existing LSPs in the network. In the example embodiment, after receiving the path calculation request message, the PCE starts to calculate the path of the LSP, and then performs the grouping operation and the sequencing operation, avoiding unnecessary resource waste.

Alternatively, the grouping information of the each LSP of the set of the LSPs and the setup and/or deleting order of the each LSP in the group to which the each LSP belongs are carried in an optional Order TLV of an RP object in the path calculation response message. In the practical application, a Group Number field is added to the Order TLV. When the value of the field is 0, the set of the LSPs may not be grouped, that is, the operations are centrally performed in one optimization/re-optimization.

From the above description, by extending the RP object in the RFC 5557, when the set of the LSPs are optimized/re-optimized by using the GCO application, the PCE divides the set of the LSPs into multiple optimization/re-optimization groups of the LSPs, wherein the groups do not impact with each other. The setup and/or deleting operation of the LSPs within all groups can be performed simultaneously. The PCE determines the order in which the setup and/or deleting operation is performed in each group, which reduces the optimization/re-optimization time of the set of the LSPs by using the GCO application, improves the efficiency of the optimization/re-optimization for the large number of the LSPs by using the GCO application, thus making up the shortage of a control plane and enhancing the function of a function plane.

In the embodiment of the present invention, the basic GCO application is not changed, and the PCEP is extended, that is, the Order TLV of the RP object included in a Path Calculation Response (PCRep) message is extended. One Group Number field is added in the Order TLV in which there are four original fields: Type, Length, Delete Order, Setup Order, wherein the Group Number field is used in the Multi-Protocol Label Switching (MPLS)/Group Multi-Protocol Label Switching (GMPLS) network. The Group Number field is specially configured to identify the optimization/re-optimization group where the each LSP is located, and may combine with the original information in the Order TLV to clearly represent the optimization/re-optimization group where the each LSP is located, and the setup and deleting order in the group. Alternatively, when the value of the Group Number field is 0, it is presented that the set of the LSPs are not grouped, that is, the deleting and/or setup operation of all the LSPs are performed centrally in one optimization/re-optimization.

The GCO is used in the PCE to group an optimization/re-optimization set including multiple LSPs in the set, so that the optimization/re-optimization set is divided into the optimization/re-optimization groups. All the groups may be optimized/re-optimized simultaneously, and the optimization/re-optimization operation in the group is performed in an order specified by the PCE. Thereby, multiple LSPs may be deleted and/or set up at the same time, which improves the efficiency of optimizing/re-optimizing the multiple LSPs by using the GCO.

Alternatively, a method for optimizing/re-optimizing a set of LSPs by using the GCO according to the example embodiment of the present invention includes that:

The PCE, during the process of optimizing/re-optimizing a set of the LSPs by using the GCO, calculates the path of the set of the LSPs and divides the set of the LSPs into a certain number of optimization/re-optimization groups, wherein the each LSP belongs to and only belongs to one group, and the order in which the each LSP is deleted and/or set up in the group is specified. The PCE transmits the PCRep message to the PCC after finishing the above calculating, grouping and sequencing operations. The Group Number field, the Setup Order field, and the Delete Order field are included in the Order TLV in the RP object of the PCRep message, wherein the Group Number field, the Setup Order field, and the Delete Order field are respectively represent in which group the LSP is set up, the setup order in the group, and the deleting order in the group. The PCC, after receiving the PCRep message, triggers a signaling to set up and delete the each LSP, so as to finish the optimization/re-optimization of the set of LSPs. During the signaling, the each LSP follows the group number specified by the Group Number field in the Order TLV and a performing order to perform orderly the setup and/or deleting operations of the each LSP in the group, wherein the performing order comprises the setup order specified in the Setup Order field and the deleting order specified in the Delete Order field in the specified group. The optimization/re-optimization operations of all the groups are performed simultaneously.

In order to make the technical solutions and implementation methods of the example embodiment of the present invention more clear, the implementation process thereof will be described in detail below in conjunction with the example embodiments.

Firstly, the PCEP is extended. One Group Number field is added to the Order TLV of the existing RP object to carry information about the optimization/re-optimization group where the each LSP is located. The extended RP object is carried in the PCRep message of the GCO application so that the PCE can carry the information about the groups of the set of the LSPs, and during the subsequent setup process of the LSP by using the signaling, the information may be used by the PCE to set up and delete the groups of these LSPs, which improves the efficiency of GCO.

The PCRep message is defined in the RFC 5440 as follows:

```
    <PCRep Message> ::= <Common Header>
                           <response-list>
```

wherein:

```
    <response-list>::=<response>[<response-list>]
    <response>::=<RP>
                   [<NO-PATH>]
                   [<attribute-list>]
                   [<path-list>]
```

In the above defined message, the Common Header is a common message header of all the messages defined in the PCEP, the response-list is configured to identify a list of replied contents transmitted by the PCE to the PCC in the PCRep message, the response is configured to identify the specific contents replied of each reply in the list of replied contents, and the RP object is configured to describe the feature of the path calculation request. The encoding format specifically defined in the above PCEP message and the PCEP object can be seen in the See RFC 5440.

Fig. 4 is a schematic diagram of an extended Order TLV format according to an example embodiment of the present invention. In the example embodiment, the PCEP is extended. The example embodiment is a format after the Group Number field is newly defined in the Order TLV of the RP object, wherein:
the length of the Type field is 16-bit, representing the type of the TLV, with a value of 5;
the length of the Length field is 16-bit, representing the total length of the sub-object, in byte (8 bits). The total length of the sub-object includes the length of the Type field and the length of the Length field, and the value of Length is at least 4 (bytes), and must be an integral multiple of 4 (bytes);
the length of the Group Number field is 32-bit, representing the number of the optimization/re-optimization group where the LSP is located during the process of this optimization/re-optimization; specifically, when the value of the Group Number field is 0, the set of LSPs are not grouped, that is, all the LSPs are deleted and/or set up centrally during the one optimization/re-optimization;
the length of the Delete Order field is 32-bit, representing a relative order in which the LSP is deleted in the optimization/re-optimization group where the LSP is located; and
the length of the Setup Order field is 32-bit, representing a relative order in which the LSP is set up in the optimization/re-optimization group where the LSP is located.

As shown in Fig. 5, the PCE receives the path calculation request transmitted by the PCC and optimizes the set of LSP sets in the network. The sets include a large number of the LSPs. When the PCE calculates the path of these LSPs and optimizes the set of the LSPs, the concurrent path calculation is performed by using the GCO application. The calculation process and the produced result are as follows:

The PCE, in view of the topologies and resources of the whole network, and the constraint information of the each LSP in the set of LSPs to be optimized, calculates the path of the each optimized LSP, and divides these LSPs into n optimization groups, i.e., Group 1, Group 2, ..., Group n in Fig. 5. Each optimization group respectively includes multiple LSPs. As shown in Fig. 5, Group 1 includes m LSPs, Group 2 includes K LSPs, ..., Group n includes t LSPs. The PCE further performs the sequencing operation to obtain the setup order of the each LSP in the n optimization groups.

The PCE, after finishing the calculation operation, transmits the calculation result to the PCC by the PCRep message. In the PCRep message, the value of the Group Number field in the Order TLV included in the RP object is 1, 2, ..., n in order; the value of the Setup Order field corresponding to the Order TLV in which the value of the Group Number field is 1 is respectively 1, 2, ..., m; the value of the Setup Order field corresponding to the Order TLV in which the value of the Group Number field is 2 is respectively 1, 2, ..., k, ...; the value of the Setup Order field corresponding to the Order TLV in which the value of the Group Number field is n is respectively 1, 2, ..., t.

The PCC receives the PCRep message transmitted by the PCE, reads the Order TLV field in the RP object, obtains the information of the each LSP that the PCE groups the set of the LSPs from the Group Number field, and obtains the setup order of the each LSP in the optimization group from the Setup Order field. In the subsequent operation of setting up the LSP by using the signaling, all the LSPs are divided into n optimization groups, and the optimization operation is performed on the each LSP according to the indication from the above information. Group 1 includes m LSPs, the optimization order in the group is: setting up path P11, setting up path P12, ..., setting up path P1 m; Group 2 includes k LSPs, the optimization order in the group is: setting up path P21, setting up path P22, ..., setting up path P2k; ...; Group n includes t LSPs, the optimization order in the group is: setting up path Pn1, setting up path Pn2, ..., setting up path Pnt. The n groups are optimized simultaneously, and each group independently performs the optimization.

As shown in Fig. 6, the PCE receives the path calculation request transmitted by the PCC and re-optimizes the set of LSPs in the network. The set of the LSPs include a large number of LSPs. When the PCE recalculates the path of these LSPs and re-optimizes these LSPs, the concurrent path calculation is performed by using the GCO application. The calculation process and the produced result are as follows:

The PCE, in view of the topologies and resources of the whole network, and the constraint information of the each LSP in the set of LSPs to be optimized, calculates the path of the each optimized LSP, and divides these LSPs into n optimization groups. Each optimization group respectively includes multiple LSPs. As shown in the figure, Group 1 includes m LSPs, Group 2 includes K LSPs, ..., Group n includes t LSPs. The PCE further performs the sequencing operation to obtain the setup and/or deleting order of the each LSP in the n re-optimization groups.

The PCE, after finishing the calculation operation, transmits the calculation result to the PCC by the PCRep message. In the PCRep message, the value of the Group Number field in the Order TLV included in the RP object is respectively 1, 2, ..., n; the value of the Delete Order field or the Setup Order field corresponding to the Order TLV in which the value of the Group Number field is 1 is respectively 1, 2, ..., m; the value of the Delete Order field or the Setup Order field corresponding to the Order TLV in which the value of the Group Number field is 2 is respectively 1, 2, ..., k; ..., the value of the Delete Order field or the Setup Order field corresponding to the Order TLV in which the value of the Group Number field is n is respectively 1, 2, ..., t.

The PCC receives the PCRep message transmitted by the PCE, reads the Order TLV field in the RP object, obtains the information of the each LSP that the PCE groups the set of the LSPs from the Group Number field, obtains the deleting order of the each LSP in the re-optimization group from the Delete Order field, and obtains the setup order of the each LSP in the re-optimization group from the Setup Order field. In the subsequent operation of deleting the LSP and/or setting up the LSP by using the signaling, all LSPs are divided into n optimization groups, and the optimization operation is performed on the each LSP according to the indication from the above information: Group 1 includes m LSPs, the optimization order in the group is: deleting path P11, setting up path P12, deleting path P13, setting up path P14, ..., deleting path P1 m; Group 2 includes k LSPs, the optimization order in the group is: deleting path P21, setting up path P22, deleting path P23, setting up path P24, ..., setting up path P2k; ...; Group n includes t LSPs, the optimization order in the group is: deleting path Pn1, deleting path Pn2, deleting path Pn3, setting up path Pn4, ..., setting up path Pnt. The n groups are re-optimized simultaneously, and the each group independently performs the re-optimization.

Up to this point, the Group Number field defined newly is carried in the Order TLV of the RP object. When a large number of LSPs are optimized/re-optimized by using the GCO application, the PCE divides these LSPs into multiple optimization/re-optimization groups, and performs the sequencing operation to obtain the deleting and/or setup order for the each LSP in each group. The operations in the each group are performed in order while the operations in the groups are performed simultaneously, which reduces the optimization/re-optimization time and improves the optimization/re-optimization efficiency greatly.

According to the above embodiments, the GCO method for the LSP includes the steps as follows:
1. the PCE receives the path calculation request message of a set of LSPs to be optimized/re-optimized;
2. the PCE, after finishing the calculation, returns the calculation result to the PCC. The calculation result comprises the optimization/re-optimization group where each LSP is located, and the deleting and/or setup order of the each LSP in each group;
3. the PCC receives the calculation result, the subsequent process of setting up the LSP operation by using the signaling is performed according to the grouping information of the each LSP and the deleting and/or setup order of the each LSP in each group included in the result.

It should be noted that the steps shown in the flowcharts of the drawings may be executed in a computer system with a group of computer-executable instructions, and although a logic sequence is shown in the flowcharts, in some cases, the steps shown or described may be executed in an order different from here.

A GCO device for an LSP is further provided in the example embodiments of the present invention, applied to a PCE. The device may be configured to implement the GCO method for the LSP. Fig. 7 is a structural diagram of a GCO device for an LSP according to an embodiment of the present invention. As shown in Fig. 7, the device includes a processing component 72 and a transmitting component 74. The structures will be described in detail below.

The processing component 72 is configured to calculate the path of each LSP of a set of LSPs in a network, group all LSPs of the set of LSPs, and perform a sequencing operation to obtain the setup and/or deleting order of the each LSP in a group to which the each LSP belongs, wherein the each LSP belongs to one group; and the transmitting component 74 is connected to the processing component 72 and configured to transmit a path calculation response message (PCRep) message to the PCC, wherein the PCRep message carries the path calculation result of the each LSP of the set of the LSPs, the grouping information of the each LSP and the setup and/or deleting order of the each LSP in the group to which the each LSP belongs.

The above device further includes: a receiving component, configured to receive the path calculation request message from the PCC, wherein the path calculation request message is configured to request the PCE to calculate the paths of a set of LSPs to be set up in the network or recalculate the paths of the set of existing LSPs in the network; wherein the processing component includes: a calculating element, configured to calculate the paths of the set of the LSPs to be set up in the network or recalculate the paths of the set of existing LSPs in the network.

Alternatively, the grouping information of the each LSP of the set of the LSPs and the setup and/or deleting order of the each LSP in the group to which the each LSP belongs are carried in an optional Order TLV of an RP object in the PCRep message.

A GCO system for an LSP is further provided in the example embodiment of the present invention. The system may be configured to implement the GCO method for the LSP. Fig. 8 is a structural diagram of a GCO system for an LSP according to an embodiment of the present invention. As shown in Fig. 8, the system includes a PCC 82 and a PCE 84, wherein,
the PCE 84 is any one of the PCEs described in the above embodiments; the PCC 82 is connected to the PCE 84 and includes: a receiving component 822, configured to receive the PCRep message from the PCE; and a processing component 824, which is connected to the receiving component 822, configured to perform a setup and/or deleting operation for the set of the LSPs according to the PCRep message.

Alternatively, the processing component 824 includes: a processing element, configured to perform the setup and/or deleting operation for a LSP in each group according to the grouping information of the each LSP and the setup and/or deleting order of the each LSP in the group of which the each LSP belongs in the PCRep message, wherein setup and/or deleting operations are concurrently performed for groups.

It should be noted that the GCO device and system for the LSP described in the device embodiments correspond to the method embodiments, the specific implementation process of which has been described in detail in the method embodiments and not repeated herein.

To sum up, by the GCO method, device and system for the LSP according to the example embodiment of the present invention, the large number of the LSPs are divided into multiple optimization/re-optimization groups, and the setup and/or deleting order for the each LSP in each group is set. While the large number of LSPs are optimized/re-optimized by using the GCO application, the operations of the groups are concurrently performed, which reduces the optimization/re-optimization time and improves the optimization/re-optimization efficiency greatly.

Obviously, those skilled in the art should understand that each of the mentioned modules or steps of the example embodiment of the present invention may be achieved by a universal computing device; the modules or steps may be focused on a single computing device, or distributed on the network formed by multiple computing devices. Optionally, they may be implemented by a program code which may be executed by the computing device. Thereby, the modules or steps may be stored in a storage device and executed by the computing device, or may be respectively manufactured as each integrated circuit module, or multiple modules or steps thereof may be manufactured as a single integrated circuit module, thus to be implemented. In this way, the present invention is not limited to any particular hardware and software combination.

The above are only the example embodiments of the present invention and are not intended to limit the present invention, for those skilled in the art, various changes and variations may be made to the present invention. Any modifications, equivalent replacements, improvements and the like within the spirit and principle of the present invention shall be contained within the scope of protection of the claims of the present invention.

## Claims

1. A Global Concurrent Optimization, GCO, method for Label Switching Path, LSP, **characterized by** comprising:
calculating, by a Path Calculate Element, PCE, a path of each LSP of a set of LSPs in a network, grouping all LSPs of the set of the LSPs, and performing a sequencing operation to obtain a setup and/or deleting order of the each LSP in a group to which the each LSP belongs, wherein the each LSP belongs to one group; and
transmitting, by the PCE, a path calculation response message to a Path Calculate Client, PCC, wherein the path calculation response message carries a path calculation result of the each LSP of the set of the LSPs, grouping information of the each LSP, and the setup and/or deleting order of the each LSP in the group to which the each LSP belongs.

2. The method according to claim 1, **characterized in that** after the PCE transmits the path calculation response message to the PCC, the method further comprises:
receiving, by the PCC, the path calculation response message from the PCE; and
performing a setup and/or deleting operation by the PCC for the set of the LSPs according to the path calculation response message.

3. The method according to claim 2, **characterized in that** performing the setup and/or deleting operation by the PCC for the set of the LSPs according to the path calculation response message comprises:
the PCC performing a setup and/or deleting operation for a LSP in each group according to the grouping information of the each LSP, and the setup and/or deleting order of the each LSP in the group to which the each LSP belongs in the path calculation response message, wherein setup and/or deleting operations are concurrently performed for groups.

4. The method according to claim 1, **characterized in that** before the PCE calculates the path of the each LSP of the set of the LSPs in the network, the method further comprises:
receiving, by the PCE, a path calculation request message from the PCC, wherein the path calculation request message is configured to request the PCE to calculate paths of a set of LSPs to be set up in the network or recalculate paths of a set of existing LSPs in the network;
wherein the calculating, by the PCE, the path of the each LSP of the set of the LSPS comprises: the PCE calculating the paths of the set of the LSPs to be set up in the network or recalculating the paths of the set of the existing LSPs in the network.

5. The method according to any one of claims 1 to 4, **characterized in that** the grouping information of the each LSP of the set of the LSPs, and the setup and/or deleting order of the each LSP in the group to which the each LSP belongs are carried in an optional Order Type Length Value, TLV, of a Request Parameter, RP, object in the path calculation response message.

6. A Global Concurrent Optimization, GCO, device for Label Switching Path, LSP, applied to a Path Calculation Element, PCE, **characterized by** comprising:
a processing component, configured to calculate a path of each LSP of a set of LSPs in a network, group all LSPs of the set of the LSPs, and perform a sequencing operation to obtain a setup and/or deleting order of the each LSP in a group to which the each LSP belongs, wherein the each LSP belongs to one group; and
a transmitting component, configured to transmit a path calculation response message to a Path Calculate Client, PCC, wherein the path calculation response message carries a path calculation result of the each LSP of the set of LSPs, grouping information of the each LSP, and the setup and/or deleting order of the each LSP in the group to which the each LSP belongs.

7. The device according to claim 6, **characterized by** further comprising:
a receiving component, configured to receive a path calculation request message from the PCC, wherein the path calculation request message is configured to request the PCE to calculate paths of a set of LSPs to be set up in the network or recalculate paths of a set of existing LSPs in the network,
wherein the processing component comprises: a calculating element, configured to calculate the paths of the set of the LSPs to be set up in the network or recalculate the paths of the set of the existing LSPs in the network.

8. The device according to claim 6 or 7, **characterized in that** the grouping information of the each LSP of the set of the LSPs and the setup and/or deleting order of the each LSP in the group to which the each LSP belongs are carried in an optional Order Type Length Value, TLV, of a Request Parameter, RP, object in the path calculation response message.

9. A Global Concurrent Optimization, GCO, system for Label Switching Path, LSP, **characterized by** comprising: a Path Calculate Client, PCC, and a Path Calculate Element, PCE, wherein
the PCE is the PCE according to any one of Claims 6 to 8;
the PCC comprises:
a receiving component, configured to receive the path calculation response message from the PCE; and
a processing component, configured to perform a setup and/or deleting operation for the set of the LSPs according to the path calculation response message.

10. The system according to claim 9, **characterized in that** the processing component comprises:
a processing element, configured to perform a setup and/or deleting operation for a LSP in each group according to the grouping information of the each LSP and the setup and/or deleting order of the each LSP in the group to which the each LSP belongs in the path calculation response message, wherein setup and/or deleting operations are concurrently performed for groups.
